Europäisches Patentamt

European Patent Office

Office européen des brevets

(19)

(11)  **EP 1 445 677 B1**

(12)  **EUROPÄISCHE PATENTSCHRIFT**

(45) Veröffentlichungstag und Bekanntmachung des
Hinweises auf die Patenterteilung:
**22.11.2006  Patentblatt 2006/47**

(51) Int Cl.:
*A23L 1/01* *(2006.01)*      *G05D 23/00* *(2006.01)*
*G05D 23/01* *(2006.01)*      *A23L 1/31* *(2006.01)*
*A47J 37/00* *(2006.01)*

(21) Anmeldenummer: **04001767.5**

(22) Anmeldetag: **28.01.2004**

(54) **Verfahren zum Steuern eines Garprozesses, insbesondere eines Delta-T-Garprozesses**

Method of controlling a cooking process, particularly a Delta -T- Cooking Process

Methode de commande d'un processus de cuisson, en particulier un processus de cuisson Delta-T

(84) Benannte Vertragsstaaten:
**DE FR IT NL**

(30) Priorität: **29.01.2003  DE 10303371**

(43) Veröffentlichungstag der Anmeldung:
**11.08.2004  Patentblatt 2004/33**

(73) Patentinhaber: **Rational AG**
**86899 Landsberg/Lech (DE)**

(72) Erfinder:
• **Imgram, Judith**
**63456 Hanau (DE)**
• **Jürgens, Andrea**
**81245 München (DE)**

• **Wallenwein, Katharina**
**86947 Weil (DE)**
• **Garner, Thomas**
**86899 Landsberg (DE)**
• **Greiner, Michael, Dr.**
**85354 Freising (DE)**
• **Klasmeier, Jürgen**
**86807 Buchloed (DE)**

(74) Vertreter: **Weber-Bruls, Dorothée**
**Forrester & Boehmert,**
**Pettenkoferstrasse 20-22**
**80336 München (DE)**

(56) Entgegenhaltungen:
**US-A- 4 752 490          US-A- 5 780 818**

**Beschreibung**

Die Erfindung betrifft ein Verfahren zum Steuern eines Garprozesses, insbesondere eines Delta-T-Garprozesses.

Ein gattungsgemäßes Verfahren zum Steuern von Garprozessen nach der Delta-T-Methode ist dem Fachmann bekannt und findet sich beispielsweise unter den Web-Adressen http://home.tele-net-zh/convotherm/fag.asp und http://www.hobart.de/kuechentechnik/gartechnik/anwend/braten.htm der Firmen Convotherm und Hobart als sogennantes Delta-T-Garen beschrieben. Bei diesem Verfahren werden die Garprodukte auf sehr schonende Weise gegart, wobei bis zum Erreichen einer gewünschten Soll-Kerntemperatur des Garguts eine ständig gleichbleibende Differenz zwischen der Garraumtemperatur und der Kerntemperatur aufrechterhalten wird. Dabei läßt sich mittlerweile die Differenz zwischen der Ist-Kerntemperatur und der Ist-Garraumtemperatur automatisch überwachen und ein Garprofil für jede Art von Gargut erstellen. Nach gängiger Auffassung ist ein schonendes Delta-T-Garen allerdings nur dann gewährleistet, wenn das Gargut in einem nicht vorgeheizten Garraum erwärmt wird (s.a. http://www.hobart.de/kuechentechnik-gartechnik/anwend/braten.htm).

Grundsätzlich wirkt sich das sehr schonende Delta-T-Garen sowohl bei Garprodukten, die nur eine sehr kurze Garzeit benötigen, als auch bei solchen mit sehr langer Garzeit positiv aus. Die zu garenden Produkte, z.B. Fleischprodukte, werden insbesondere in Großküchen, Fast-Food-Restaurants und Kantinen regelmäßig unmittelbar vor dem Garprozeß direkt aus dem Kühlschrank oder dem Kühllager entnommen und in ein Gargerät überführt, da sich auf diese Weise Arbeitsabläufe verkürzen, Lagerplatz sparen und die Gefahr von Verunreinigungen sowie der Bildung von Krankheitserregern und damit insgesamt das hygienische Risiko minimieren lassen. Die für jedes Gargut charakteristischen optimalen Delta-T-Werte können mitunter nur einige Grand Celsius betragen, wodurch sich insbesondere für gekühlte Gargüter eine relativ niedrige Anfangsaufwärmtemperatur ergibt. Dieses bringt häufig sehr lange Aufwärmphasen mit sich, da die aus der Summe von anfänglicher Kerntemperatur des Garguts und Delta-T-Wert errechnete Anfangsgartemperatur dann zumeist unterhalb einer niedrigsten Heiztemperatur eines Gargerätes liegt. Zwar mag sich letztendlich auch bei gekühlten Gargütern über das herkömmliche Delta-T-Garen eine zufriedenstellende Sensorik einstellen, häufig allerdings nur unter Inkaufnahme eines nicht geringen Hygienerisikos. Denn häufig vermehren sich Krankheitskeime bei Temperaturen von etwa 30°C bis 40°C besonders stark. Nichtsdestotrotz kommt in den aus dem Stand der Technik bekannten Garverfahren die Delta-T-Methode regelmäßig unter Inkaufnahme obiger Nachteile zur Anwendung.

Das Dokument US 5,780,818 zeigt einen relevanten Stand der Technik.

Aufgabe der vorliegenden Erfindung ist es daher, die Nachteile des gattungsgemäßen Verfahren abzustellen und dieses Verfahren derart weiterzuentwickeln, daß ein Gargut unter sehr schonenden Bedingungen unter Erhalt einer herausragenden Sensorik gegart werden kann, so daß ein Hygienerisiko ausgeschlossen werden kann.

Diese Aufgabe wird erfindungsgemäß gelöst durch ein Verfahren zum Steuern eines Garprozesses, umfassend die folgenden Schritte:

a) Auswählen einer Soll-Kerntemperatur $KT_s$ eines in einem Garraum zu garenden, insbesondere gekühlten, Garguts, sowie einer Anfangsgarraumtemperatur $GT_o$, die insbesondere in etwa der Soll-Kerntemperatur $KT_s$ entspricht,

b) Einbringen des Garguts mit einer anfänglichen Kerntemperatur $KT_o$, einer anfänglichen Randzonentemperatur $RT_o$ und einer anfänglichen Oberflächentemperatur $OT_o$ in den Garraum, wobei zumindest die anfängliche Kerntemperatur $KT_o$ kleiner als die Anfangsgarraumtemperatur $GT_o$ ist,

c) Aufheizen des Garraums auf die Anfangsgarraumtemperatur $GT_o$,

d) Erfassen, insbesondere kontinuierlich oder intervallweise, der aktuellen Kerntemperatur $KT_a$, der aktuellen Randzonentemperatur $RT_a$ und/oder der aktuellen Oberflächentemperatur $OT_a$, insbesondere über einen Garprozeßfühler, sowie der aktuellen Garraumtemperatur $GT_a$,

e) Absenken, insbesondere kontinuierlich oder intervallweise, der Anfangsgarraumtemperatur $GT_o$ bis auf eine Umkehrtemperatur $GT_u$ im Garraum, die der Summe aus anfänglicher Kerntemperatur $KT_o$ und einem vorgegebenen ersten Temperaturabstandswert, der Summe aus anfänglicher Randzonentemperatur $RT_o$ und einem vorgegebenen zweiten Temperaturabstandswert oder der Summe aus anfänglicher Oberflächentemperatur $OT_o$ und einem vorgegebenen dritten Temperaturabstandswert entspricht,

f) Erhöhen, insbesondere kontinuierlich oder intervallweise, der Garraumtemperatur $GT_a$ ab Erreichen der Umkehrtemperatur $GT_u$ bis die aktuelle Kerntemperatur $KT_a$ die Soll-Kerntemperatur $KT_s$, die aktuelle Randzonentemperatur $RT_a$ die Soll-Randzonentemperatur $RT_s$ oder die aktuelle Oberflächentemperatur $OT_a$ die Soll-Oberflächentemperatur $OT_s$ erreicht.

Alternative Ausführungsformen des erfindungsgemäßen Verfahrens zeichnen sich dadurch aus, daß die Schrittfolge a), b), c), d), e) und f) oder b), a), c), d), e) und f) oder a), c), b), d), e) und f) durchgeführt wird.

Dabei kann erfindungsgemäß vorgesehen werden, daß während des Absenkens der Garraumtemperatur $GT_a$ im Schritt e) die aktuelle Garraumtemperatur $GT_a$ in vorgegebener Korrelation zur aktuellen Kerntemperatur $KT_a$, zur

aktuellen Randzonentemperatur $RT_a$ oder zur aktuellen Oberflächentemperatur $OT_a$ sinkt.

Hierbei zeichnet sich eine Ausführungsform des erfindungsgemäßen Verfahrens dadurch aus, daß zumindest zeitweise die aktuelle Garraumtemperatur $GT_a$ in dem Maße absinkt, in dem die aktuelle Kerntemperatur $KT_a$, die aktuelle Randzonentemperatur $RT_a$ oder die aktuelle Oberflächentemperatur $OT_a$ zunimmt. Demgemäß entspricht hierbei die negative Steigung der Garraumtemperatur in etwa dem Anstieg der Kerntemperatur. Gemäß einer weiteren Ausführungsform wird als vorteilhaft vorgeschlagen, daß die aktuelle Garraumtemperatur $GT_a$ zumindest zeitweise, insbesondere mit fortschreitender Absenkung der Garraumtemperatur $GT_a$ im Schritt e), in einem stärkeren Maße abnimmt, als die Kerntemperatur $KT_a$ zunimmt. Für diesen Fall ist die negative Steigung der Garraumtemperatur vom Betrag her größer als der Anstieg der Kerntemperatur.

Gemäß einer vorteilhaften Ausgestaltung des erfindungsgemäßen Verfahrens ist vorgesehen, daß der erste Temperaturabstandswert, der zweite Temperaturabstandswert und/oder der dritte Temperaturabstandswert vorgegeben oder berechnet wird bzw. werden, und/oder daß ein vierter Temperaturabstandswert oder Delta-T-Wert aus der Differenz zwischen der Umkehrtemperatur $GT_u$ und der aktuellen Kerntemperatur $KT_a$, ein fünfter Temperaturabstandswert aus der Differenz zwischen der Umkehrtemperatur $GT_u$ und der aktuellen Randzonentemperatur $RT_a$ und/oder ein sechster Temperaturabstandswert aus der Differenz zwischen der Umkehrtemperatur $GT_u$ und der aktuellen Oberflächentemperatur $OT_a$ jeweils zu dem Zeitpunkt, an dem die aktuelle Garraumtemperatur $GT_a$ die Umkehrtemperatur $GT_u$ erreicht, vorgegeben oder berechnet wird bzw. werden.

Zur Erreichung einer guten Sensorik ist hierbei von Vorteil, wenn das Absenken der aktuellen Garraumtemperatur $GT_a$ in Abhängigkeit von der Erhöhung der aktuellen Kerntemperatur $KT_a$ zumindest zeitweise geregelt wird, wobei vorzugsweise die Abnahme $\Delta T$ der aktuellen Garraumtemperatur $GT_a$ in etwa durch die folgende Gleichung wiedergegeben wird:

$$\Delta T = (\text{Soll-Kerntemperatur } KT_s - \text{Umkehrtemperatur } GT_u)/(\text{Umkehrtemperatur } GT_u -$$

$$(\text{Kerntemperatur } KT_a + \text{vierter Delta-T-Wert}).$$

Gemäß einer weiteren Ausführungsform der Erfindung wird vorgeschlagen, daß die aktuelle Garraumtemperatur $GT_a$ manuell, halb- oder vollautomatisch über eine Steuer- und/oder Regeleinheit, insbesondere unter Einsatz einer mikroprozessorgestützten Prozessorsteuerung und/oder eines Garprozeßfühlers, der mindestens eine in das Gargut zumindest teilweise, vorzugsweise über einen Griff, einführbare Spitze mit zumindest zwei, insbesondere vier, Temperatursensoren umfaßt, gesteuert und/oder geregelt wird.

Somit können für unterschiedlichste Gargüter Datensätze in einer Steuereinheit vorliegen oder durch diese aus einem Speicher abgerufen oder vom Benutzer abgefragt und für die Erstellung und Durchführung eines erfindungsgemäßen Garverfahrens herangezogen werden. So können beispielsweise bestimmte Parameter wie die Mindestheiztemperatur bereits im System gespeichert sein und keiner erneuten Eingabe bedürfen. Auch können abhängig von z.B. der Art, Größe, Menge und/oder Anfangskerntemperatur des Garguts charakteristische Temperaturprogramme abrufbar sein, die beispielsweise auch bereits den jeweils optimalen Delta-T-Temperaturabstand berücksichtigen.

Über den beschriebenen Garprozeßfühler lassen sich mehrere Temperaturwerte innerhalb des Garguts in verschiedenen Einstecktiefen und vorzugsweise mindestens ein weiterer Temperaturwert an der Oberfläche und/oder außerhalb des Garguts bestimmen. Ein solcher Garprozeßfühler kann geeigneterweise ein Kabel oder eine Sende- und Empfangseinheit samt Versorgungseinheit umfassen. Mit einem derartigen Garprozeßfühler läßt sich beim Garen insbesondere die Kerntemperatur $KT_a$ eines Garguts aus der Kinematik, also dem zeitlichen Verlauf, von in dem Gargut mittels dieses Garprozeßfühlers erfaßten Temperaturwerten sehr genau bestimmen, selbst bei nicht exakt positioniertem Garprozeßfühler. Auf diese Weise lassen sich bei den vorliegenden kerntemperaturgesteuerten Garprogrammen bessere und vor allem besser reproduzierbare Garresultate erzielen. Besonders geeignete Garprozeßfühler finden sich z.B. in der DE 199 54 021 A beschrieben. Für die Bestimmung der Garraumtemperatur kann auch auf geeignete, dem Fachmann bekannte Temperatursensoren im Garraum zurückgegriffen werden.

In einer Weiterentwicklung der Erfindung ist vorgesehen, daß der erste, zweite, dritte, vierte, fünfte und/oder sechste Temperaturabstandswert in Abhängigkeit von zumindest einer Gargutgröße, umfaßt von dem Gewicht, der Art, der Dichte, der Bemaßung, dem Durchmesser, dem Reifegrad, dem pH-Wert, dem Lagerungszustand, der Konsistenz, dem Geruch, der Bräunung, der Krustenbildung, der Wärmeleitfähigkeit, dem Geschmack, der Qualität, der Hygiene, der anfänglichen Kerntemperatur $KT_o$, der anfänglichen Randzonentemperatur $RT_o$, der anfänglichen Oberflächentemperatur $OT_o$, der Soll-Kerntemperatur $KT_s$, der Soll-Randzonentemperatur $RT_s$ und/oder der Soll-Oberflächentemperatur $OT_s$, errechnet wird bzw. werden.

Das erfindungsgemäße Verfahren zeichnet sich insbesondere auch dadurch aus, daß als Gargut Fleisch, insbesondere Schinken, vorzugsweise gekochter Schinken, Räucherware und/oder Pökelware ausgewählt wird.

Gemäß einer geeigneten Ausgestaltung des erfindungsgemäßen Verfahrens kann beispielsweise die aktuelle Garraumtemperatur $GT_a$ im Schritt e) bis auf eine vorgegebene Umkehrtemperatur $GT_u$, insbesondere eine Mindest-heiztemperatur des Gargeräts, im Bereich von etwa 20 bis 40°C, insbesondere von etwa 30°C, abgesenkt werden. Ferner kann erfindungsgemäß vorgesehen werden, daß der Delta-T-Temperaturabstand im Bereich von 3°C bis 40°C, insbesondere im Bereich von 5°C bis 20°C, liegt. Von Vorteil für das erfindungsgemäße Verfahren ist weiterhin, wenn die Anfangsgarraumtemperatur nur in dem Maße erhöht wird oder eingestellt wird, daß keine Übergare des Garguts eintritt. Grundsätzlich ist es empfehlenswert, dem Gargut nur soviel Wärmeenergie zuzuführen, die erforderlich ist, um ein hygienisches Risiko durch zu langes Verweilen bei einer niedrigen Temperatur auszuschließen, wobei gleichzeitig die sensorische Qualität des Garguts nicht beeinträchtigt wird. Als zweckmäßig hat sich hierbei erwiesen, daß die Anfangsgarraumtemperatur in einer Weise abgesenkt wird, daß das hygienische Risiko möglichst gering gehalten wird.

Mit dem erfindungsgemäßen Verfahren läßt sich die Garzeit für das Delta-T-Garen merklich verkürzen. Dieses betrifft insbesondere Produkte, die üblicherweise eine lange Gardauer benötigen sowie solche Produkte, die gekühlt in das Gargerät eingeführt werden, um anschließend unmittelbar gegart zu werden. Mit dem erfindungsgemäßen Verfahren sind gegenüber dem bekannten Delta-T-Garverfahren hinsichtlich der Sensorik der erhaltenen Garprodukte keinerlei Einbußen in Kauf zu nehmen. Vielmehr zeichnen sich die erhaltenen Produkte durch eine nochmals verbesserte Sensorik aus. Auch kann für jedes Garprodukt gezielt produktspezifisch sowie unter Berücksichtigung der Anzahl zu garender Produkte, des Gesamt- und/oder Einzelgewichts und/oder des Feuchtegehalts die erforderliche zusätzliche Wärmemenge zu Beginn des Garvorgangs zugeführt und/oder der optimale Temperaturverlauf ausgewählt werden. Von besonderem Vorteil ist, daß mit dem erfindungsgemäßen Verfahren das hygienische Risiko, das üblicherweise z.B. mit herkömmlichen Delta-T-Garverfahren, insbesondere auch bei großteiligen und/oder gekühlten Garprodukten, einhergeht, nochmals reduziert werden kann. Besonders gut eignen sich die erfindungsgemäßen Verfahren zum Garen von Schinken, insbesondere Kochschinken, sowie Räucher- und Pökelware, Großbratstücken und besonders temperaturempfindlichen Produkten.

Weitere Merkmale und Vorteile der Erfindung ergeben sich aus der nachstehenden Beschreibung, in der eine Ausführungsform eines erfindungsgemäßen Verfahrens beispielhaft anhand von Zeichnungen erläutert wird. Dabei zeigen

Figur 1    ein Temperatur/Zeit-Diagramm für ein erfindungsgemäßes Garverfahren, und

Figur 2    den in Figur 1 oval umkreisten Abschnitt in vergrößerter Darstellung.

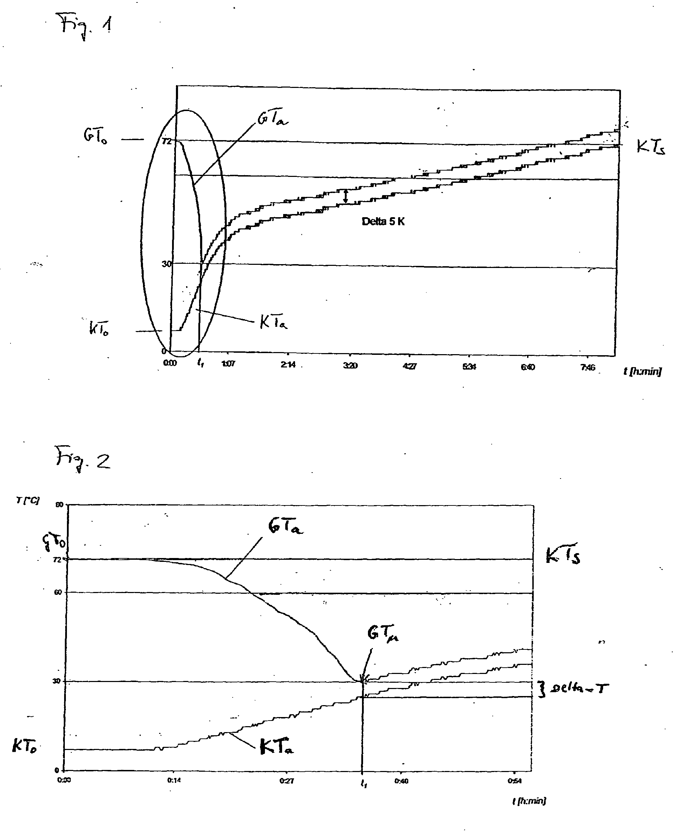

Wie Figur 1 zu entnehmen ist, ist ein nicht dargestelltes Gargut mit einer Anfangskerntemperatur $KT_o$ von etwa 8°C in einen nicht dargestellten Garraum mit einer Anfangsgarraumtemperatur $GT_o$ von etwa 72°C eingebracht worden, was im vorliegenden Fall auch der Soll-Kerntemperatur $KT_s$ des Garguts entspricht. Die Erwärmung des Garguts kann z.B. über einen Garprozeßfühler, wie in der DE 199 54 021 A beschrieben, erfaßt und verfolgt werden. Sobald sich ein Anstieg der aktuellen Kerntemperatur $KT_a$ des Garguts feststellen läßt, wird die aktuelle Garraumtemperatur $GT_a$ in entsprechender Weise abgesenkt. Dabei wird vorzugsweise zu Beginn der Erwärmung des Garguts die Garraumtem-peratur $GT_a$ in dem Maße abgesenkt, wie die Kerntemperatur $KT_a$ ansteigt. Im weiteren Verlauf, vorliegend beginnend bei etwa 60°C, wird dann bevorzugt die Garraumtemperatur $GT_a$ in einem stärkeren Maße abgesenkt, als die Kerntem-peratur $KT_a$ des Garguts zunimmt. Die anfängliche Garraumtemperatur $GT_o$ wird dabei vorteilhafterweise bis zu einer Umkehrtemperatur $GT_u$ abgesenkt, bei der die Mindestheizleistung des Gargerätes einsetzt. Bei gängigen Gargeräten liegt diese erste Heizanforderung häufig bei etwa 30°C. Bei dieser Temperatur setzt bei herkömmlichen Gargeräten die Programmregelung ein. Geeigneterweise gelangt die Garraumtemperatur bei diesem Wert in etwa dann an, wenn die Kerntemperatur $KT_a$ einen Wert erreicht, der sich nur noch um den Wert Delta-T von der Garraumtemperatur $GT_a$, auch Umkehrtemperatur $GT_u$ genannt, unterscheidet. Hiernach kann der Garprozeß im Sinne des bekannten Delta-T-Garverfahrens bis zum Erreichen der Soll-Kerntemperatur $KT_s$ des Garguts fortgeführt werden. Eine, vorzugsweise konstante, Temperaturdifferenz Delta-T zwischen Garraumtemperatur $GT_a$ und Kerntemperatur $KT_a$ von im vorliegenden Fall 5 K wird dabei bis zum Erreichen der Soll-Kerntemperatur $KT_s$ aufrechterhalten.

Selbstverständlich umfassen die erfindungsgemäßen Garverfahren auch solche Garverfahren, bei denen der Delta-T-Wert nicht während der gesamten Aufwärmphase konstant gehalten wird, sondern in Abhängigkeit von der jeweiligen Kerntemperatur variiert wird.

**Patentansprüche**

**1.** Verfahren zum Steuern eines Garprozesses, umfassend folgende Schritte:

a) Auswählen einer Soll-Kerntemperatur $KT_s$ eines in einem Garraum zu garenden, insbesondere gekühlten, Garguts, sowie einer Anfangsgarraumtemperatur $GT_o$, die insbesondere in etwa der Soll-Kerntemperatur $KT_s$ entspricht,

b) Einbringen des Garguts mit einer anfänglichen Kemtemperatur $KT_o$, einer anfänglichen Randzonentemperatur $RT_o$ und einer anfänglichen Oberflächentemperatur $OT_o$ in den Garraum, wobei zumindest die anfängliche Kemtemperatur $KT_o$ kleiner als die Anfangsgarraumtemperatur $GT_o$ ist,

c) Aufheizen des Garraums auf die Anfangsgarraumtemperatur $GT_o$,

d) Erfassen, insbesondere kontinuierlich oder intervallweise, der aktuellen Kemtemperatur $KT_a$, der aktuellen Randzonentemperatur $RT_a$ und/oder der aktuellen Oberflächentemperatur $OT_a$, insbesondere über einen Garprozeßfühler, sowie der aktuellen Garraumtemperatur $GT_a$,

e) Absenken, insbesondere kontinuierlich oder intervallweise, der Anfangsgarraumtemperatur $GT_o$ bis auf eine Umkehrtemperatur $GT_u$ im Garraum, die der Summe aus anfänglicher Kerntemperatur $KT_o$ und einem vorgegebenen ersten Temperaturabstandswert, der Summe aus anfänglicher Randzonentemperatur $RT_o$ und einem vorgegebenen zweiten Temperaturabstandswert oder der Summe aus anfänglicher Oberflächentemperatur $OT_o$ und einem vorgegebenen dritten Temperaturabstandswert entspricht,

f) Erhöhen, insbesondere kontinuierlich oder intervallweise, der Garraumtemperatur $GT_a$ ab Erreichen der Umkehrtemperatur $GT_u$ bis die aktuelle Kerntemperatur $KTa$ die Soll-Kerntemperatur $KT_s$, die aktuelle Randzonentemperatur $RT_a$ die Soll-Randzonentemperatur $RT_s$ oder die aktuelle Oberflächentemperatur $OT_a$ die Soll-Oberflächentemperatur $OT_s$ erreicht.

2. Verfahren nach Anspruch 1, **dadurch gekennzeichnet, daß**
die Schrittfolge b), a), c), d), e) und f) oder a), c), b), d), e) und f) durchgeführt wird.

3. Verfahren nach Anspruch 1 oder 2, **dadurch gekennzeichnet, daß**
während des Absenkens der Garraumtemperatur $GT_a$ im Schritt e) die aktuelle Garraumtemperatur $GT_a$ in vorgegebener Korrelation zur aktuellen Kerntemperatur $KT_a$, zur aktuellen Randzonentemperatur $RT_a$ oder zur aktuellen Oberflächentemperatur $OT_a$ sinkt.

4. Verfahren nach Anspruch 3, **dadurch gekennzeichnet, daß**
zumindest zeitweise die aktuelle Garraumtemperatur $GT_a$ in dem Maße absinkt, in dem die aktuelle Kerntemperatur $KT_a$, die aktuelle Randzonentemperatur $RT_a$ oder die aktuelle Oberflächentemperatur $OT_a$ zunimmt.

5. Verfahren nach einem der vorangehenden Ansprüche, **dadurch gekennzeichnet, daß**
der erste Temperaturabstandswert, der zweite Temperaturabstandswert und/oder der dritte Temperaturabstandswert vorgegeben oder berechnet wird bzw. werden, und/oder daß ein vierter Temperaturabstandswert oder Delta-T-Wert aus der Differenz zwischen der Umkehrtemperatur $GT_u$ und der aktuellen Kerntemperatur $KT_a$, ein fünfter Temperaturabstandswert aus der Differenz zwischen der Umkehrtemperatur $GT_u$ und der aktuellen Randzonentemperatur $RT_a$ und/oder ein sechster Temperaturabstandswert aus der Differenz zwischen der Umkehrtemperatur $GT_u$ und der aktuellen Oberflächentemperatur $OT_a$ jeweils zu dem Zeitpunkt, an dem die aktuelle Garraumtemperatur $GT_a$ die Umkehrtemperatur $GT_u$ erreicht, vorgegeben oder berechnet wird bzw. werden.

6. Verfahren nach einer der Ansprüche 3 bis 5, **dadurch gekennzeichnet, daß**
das Absenken der aktuellen Garraumtemperatur $GT_a$ in Abhängigkeit von der Erhöhung der aktuellen Kemtemperatur $KT_a$ zumindest zeitweise geregelt wird, wobei vorzugsweise die Abnahme $\Delta T$ der aktuellen Garraumtemperatur $GT_a$ in etwa durch die folgende Gleichung wiedergegeben wird:

$$\Delta T = (\text{Soll-Kerntemperatur } KT_s - \text{Umkehrtemperatur } GT_u)/(\text{Umkehrtemperatur } GT_u - (\text{Kerntemperatur } KT_a + \text{Delta-T-Wert}).$$

7. Verfahren nach einem der vorangehenden Ansprüche, **dadurch gekennzeichnet, daß** zumindest die aktuelle Garraumtemperatur $GT_a$ manuell, halb- oder vollautomatisch über eine Steuer- und/oder Regeleinheit, insbesondere unter Einsatz einer mikroprozessorgestützten Prozessorsteuerung und/oder eines Garprozeßfühlers, der mindestens eine in das Gargut zumindest teilweise, vorzugsweise über einen Griff, einführbare Spitze mit zumindest zwei, insbesondere vier, Temperatursensoren umfaßt, gesteuert und/oder geregelt wird.

8. Verfahren nach einem der vorangehenden Ansprüche, **dadurch gekennzeichnet, daß** der erste, zweite, dritte, vierte, fünfte und/oder sechste Temperaturabstandswert in Abhängigkeit von zumindest einer Gargutgröße, umfaßt von dem Gewicht, der Art, der Dichte, der Bemaßung, dem Durchmesser, dem Reifegrad, dem pH-Wert, dem Lagerungszustand, der Konsistenz, dem Geruch, der Bräunung, der Krustenbildung, der Wärmeleitfähigkeit, dem Geschmack, der Qualität, der Hygiene, der anfänglichen Kemtemperatur $KT_o$, der anfänglichen Randzonentemperatur $RT_o$, der anfänglichen Oberflächentemperatur $OT_o$, der Soll-Kerntemperatur $KT_s$, der Soll-Randzonentemperatur $RT_s$ und/oder der Soll-Oberflächentemperatur $OT_s$, errechnet wird bzw. werden.

9. Verfahren nach einem der vorangehenden Ansprüche, **dadurch gekennzeichnet, daß** als Gargut Fleisch, insbesondere Schinken, vorzugsweise gekochter Schinken, Räucherware und/oder Pökelware ausgewählt wird.

**Claims**

1. Method for controlling a cooking process, comprising the following steps:

   a) selecting a desired core temperature $KT_s$ for a, particularly refrigerated, item which is to be cooked in a cooking chamber, and selecting an initial cooking chamber temperature $GT_o$ which, in particular, approximately corresponds to the desired core temperature $KT_s$,
   b) inserting the item to be cooked into the cooking chamber at an initial core temperature $KT_o$, an initial edge zone temperature $RT_o$ and an initial surface temperature $OT_o$, with at least the initial core temperature $KT_o$ being lower than the initial cooking chamber temperature $GT_o$,
   c) heating up the cooking chamber to the initial cooking chamber temperature $GT_o$,
   d) detecting, in particular continuously or at intervals, the actual core temperature $KT_a$, the actual edge zone temperature $RT_a$ and/or the actual surface temperature $OT_a$, in particular by means of a cooking process sensor, and also the actual cooking chamber temperature $GT_a$,
   e) lowering, in particular continuously or at intervals, the initial cooking chamber temperature $GT_o$ down to a reversal temperature $GT_u$ in the cooking chamber, this temperature corresponding to the sum of the initial core temperature $KT_o$ and a prespecified first temperature difference value, to the sum of the initial edge zone temperature $RT_o$ and a prespecified second temperature difference value, or to the sum of the initial surface temperature $OT_o$ and a prespecified third temperature difference value,
   f) increasing, in particular continuously or at intervals, the cooking chamber temperature $GT_a$ starting from when the reversal temperature $GT_u$ is reached until the actual core temperature $KT_a$ reaches the desired core temperature $KT_s$, the actual edge zone temperature $RT_a$ reaches the desired edge zone temperature $RT_s$, or the actual surface temperature $OT_a$ reaches the desired surface temperature $OT_s$.

2. Method according to Claim 1, **characterized in that** the steps are carried out in the sequence b), a), c), d), e) and f) or a), c), b), d), e) and f).

3. Method according to Claim 1 or 2, **characterized in that** while the cooking chamber temperature $GT_a$ is lowered in step e), the actual cooking chamber temperature $GT_a$ falls in prespecified correlation to the actual core temperature $KT_a$, to the actual edge zone temperature $RT_a$, or to the actual surface temperature $OT_a$.

4. Method according to Claim 3, **characterized in that** the actual cooking chamber temperature $GT_a$ at least temporarily falls to the extent to which the actual core temperature $KT_a$, the actual edge zone temperature $RT_a$ or the actual surface temperature $OT_a$ increases.

5. Method according to one of the preceding claims, **characterized in that** the first temperature difference value, the second temperature difference value and/or the third temperature difference value are/is prespecified or calculated, and/or **in that** a fourth temperature difference value or delta-T value is prespecified or calculated from the difference between the reversal temperature $GT_u$ and the actual core temperature $KT_a$, a fifth temperature difference value is prespecified or calculated from the difference between the reversal temperature $GT_u$ and the actual edge zone temperature $RT_a$, and/or a sixth temperature difference value is prespecified or calculated from the difference between the reversal temperature $GT_u$ and the actual surface temperature $OT_a$, in each case at the point in time at which the actual cooking chamber temperature $GT_a$ reaches the reversal temperature $GT_u$.

6. Method according to one of Claims 3 to 5, **characterized in that** the actual cooking chamber temperature $GT_a$ is lowered as a function of the increase in the actual core temperature $KT_a$ in an at least temporarily regulated manner, with the drop ÄT in the actual cooking chamber temperature $GT_a$ preferably being approximately given by the following equation:

$$\text{ÄT = (Desired core temperature } KT_s - \text{reversal temperature } GT_u)/(\text{Reversal temperature } GT_u - \text{core temperature } KT_a + \text{delta-T value).}$$

7. Method according to one of the preceding claims, **characterized in that** at least the actual cooking chamber temperature $GT_a$ is manually, semiautomatically or fully automatically controlled and/or regulated by means of a control and/or regulating unit, in particular using a microprocessor-assisted processor control system and/or a cooking process sensor which comprises at least one tip which can be at least partially inserted into the item to be cooked, preferably by means of a handle, and has at least two, in particular four, temperature sensors.

8. Method according to one of the preceding claims, **characterized in that** the first, second, third, fourth, fifth and/or sixth temperature difference values or value are/is calculated as a function of at least one variable of the item to be cooked, including the weight, the type, the density, the size, the diameter, the maturity, the pH, the storage state, the consistency, the smell, the degree of browning, the formation of crusts, the thermal conductivity, the taste, the quality, the cleanliness, the initial core temperature $KT_o$, the initial edge zone temperature $RT_o$, the initial surface temperature $OT_o$, the desired core temperature $KT_s$, the desired edge zone temperature $RT_s$ and/or the desired surface temperature $OT_s$.

9. Method according to one of the preceding claims, **characterized in that** the item to be cooked which is selected is meat, in particular ham, preferably boiled ham, smoked foods and/or pickled foods.

**Revendications**

1. Procédé de commande d'un processus de cuisson, comprenant les étapes suivantes :

a) sélection d'une température de consigne à coeur $KT_s$, d'un produit à cuire, devant être cuit dans une enceinte de cuisson, en particulier ayant été refroidi, ainsi qu'une température initiale d'enceinte de cuisson $GT_0$ correspondant en particulier à peu près à la température de consigne à coeur $KT_s$,
b) introduction du produit à cuire, ayant une température initiale à coeur $KT_0$, une température de zone de bordure d'air $RT_0$ et une température de surface $OT_o$ initiale, dans l'enceinte de cuisson, sachant qu'au moins la température initiale à coeur $KT_0$ est inférieure à la température initiale d'enceinte de cuisson $GT_0$,
c) chauffage de l'enceinte de cuisson à la température d'enceinte de cuisson initiale $GT_0$,
d) détection, en particulier de façon continue ou par intervalles, de la température à coeur actuelle $KT_a$, de la température de zone de bordure actuelle $RT_a$ ou de la température de surface actuelle $OT_a$, en particulier par l'intermédiaire d'une sonde de processus de cuisson, ainsi que de la température d'enceinte de cuisson actuelle $GT_a$,
e) abaissement, en particulier continu ou par intervalles, de la température initiale d'enceinte de cuisson $GT_0$ jusqu'à une température d'inversion $GT_u$ dans l'enceinte de cuisson qui correspond à la somme formée de la température à coeur initiale $KT_0$ et d'une première valeur d'écart de température prédéterminée, à la somme formée de la température initiale de zone de bordure $RT_0$ et d'une deuxième valeur d'écart de température prédéterminé, ou à la somme formée de la température initiale de surface $OT_0$ et d'une troisième valeur d'écart de température prédéterminée,
f) augmentation, en particulier de façon continue ou par intervalles, de la température d'enceinte de cuisson $GT_a$, à l'atteinte de la température d'inversion $GT_u$, jusqu'à ce que la température à coeur actuelle $KT_a$ atteigne la température de consigne à coeur $KT_s$, que la température de zone de bordure actuelle $RT_a$ atteigne la température de zone de bordure de consigne $RT_s$ ou que la température de surface actuelle Ota atteigne la température de consigne de surface $OT_s$.

**2.** Procédé selon la revendication 1, **caractérisé en ce qu'**on suit l'ordre de succession b), a), c), d), e) et f) ou a), c), d), e) et f).

**3.** Procédé selon la revendication 1 ou 2, **caractérisé en ce que**, pendant l'abaissement de la température d'enceinte de cuisson $GT_a$ à l'étape e), la température d'enceinte de cuisson actuelle $GT_a$ baisse, en une corrélation prédéterminée par rapport à la température à coeur actuelle $KT_a$, par rapport à la température de zone de bordure actuelle $RT_a$ ou par rapport à la température de surface actuelle Ota.

**4.** Procédé selon la revendication 3, **caractérisé en ce qu'**au moins partiellement, la température d'enceinte de cuisson actuelle $GT_a$ baisse à un degré auquel la température de noyau actuelle $KT_a$, la température de zone de bordure actuelle $RT_a$ ou la température de surface actuelle $OT_a$, augmente.

**5.** Procédé selon l'une des revendications précédentes, **caractérisé en ce que** la première valeur d'écart de température, la deuxième valeur d'écart de température et/ou la troisième valeur d'écart de température est ou sont prédéterminée(s) ou calculée(s), et/ou **en ce qu'**une quatrième valeur d'écart de température ou valeur Delta-T, formée de la différence, entre la température d'inversion $GT_u$ et la température à coeur actuelle $KT_a$, une cinquième valeur d'écart de température, formée de la différence entre la température d'inversion $GT_u$ et la température de zone de bordure actuelle $RT_a$ et/ou une sixième valeur d'écart de température, formée de la différence entre la température d'inversion $GT_u$ et la température de surface actuelle $OT_a$, chaque fois au moment auquel la température d'enceinte de cuisson actuelle $GT_a$ atteint la température d'inversion $GT_u$ est atteinte, est ou sont prédéterminée (s) ou calculée(s)

**6.** Procédé selon l'une des revendications 3 à 5, **caractérisé en ce que**
l'abaissement de la température d'enceinte de cuisson actuelle $GT_a$ est régulé, au moins par moments, en fonction de l'augmentation de la température à coeur actuelle $KT_a$, sachant que, de préférence, la diminution $\Delta t$ de la température d'enceinte de cuisson actuelle $GT_a$ est restituée à peu près par l'équation suivante :

```
ΔT = (température à cœur de consigne KTs − température
d'inversion GTu)/(température d'inversion GTu − température
à cœur KTa + valeur Delta T).
```

**7.** Procédé selon l'un des revendications précédentes, **caractérisé en ce qu'**
au moins la température d'enceinte de cuisson actuelle $GT_a$ est commandée et/ou régulée, de façon semi- ou entièrement automatique, par l'intermédiaire d'une unité de commande et/ou de régulation, en particulier en utilisant une commande par processeur assistée par un microprocesseur et/ou une sonde de processus de cuisson, qui comprend au moins une pointe, ayant au moins deux, en particulier trois capteurs de température, pointe pouvant être introduite au moins partiellement, de préférence par l'intermédiaire d'un manche, dans le produit à cuire.

**8.** Procédé selon l'une des revendications précédentes **caractérisé en ce que** la première, la deuxième, la troisième, la quatrième, la cinquième et/ou la sixième valeur d'écart de température, est ou sont calculées en fonction d'au moins une grandeur de produit à cuire, notamment du poids, du genre, de la masse volumique, des dimensions, du diamètre, du degré de maturité, de la valeur de pH, de l'état de stockage, de la consistance, de l'odeur, du brunissage, de la formation de croûte, de la conductivité thermique, du goût, de la qualité, de l'hygiène, de la température à coeur initiale $KT_0$, de la température de zone de cuisson initiale RTO, de la température de surface initiale Ot0, de la température de consigne de noyau $KT_s$, de la température de zone de bordure de consigne $RT_s$ et/ou de la température de surface de consigne $OT_s$.

**9.** Procédé selon l'une des revendications précédentes **caractérisé en ce que** l'on sélectionne comme produit à cuire de la viande, en particulier du poulet, de préférence du préférence du poulet cuit, des articles de fumaison et/ou des produits de salaison.

Fig. 1

Fig. 2